# EUROPÄISCHE PATENTANMELDUNG

(11) **EP 1 669 267 A2**
(43) Veröffentlichungstag der Anmeldung: **14.06.2006**
(21) Anmeldenummer: 05015378.2
(22) Anmeldetag: 15.07.2005
(51) Int. Cl.: B60S 9/12

(54) **Stützvorrichtung für Anhänger**

(30) Priorität: 15.07.2004 DE 102004034105
(71) Anmelder: Gabelstapler Volker Kröwel, 51107 Köln (DE)
(72) Erfinder: Kröwel, Volker, 51107 Köln (DE)
(74) Vertreter: Wanischeck-Bergmann, Axel

(57) **Zusammenfassung**

Die vorliegende Erfindung betrifft eine Stützvorrichtung für Anhänger mit einer durch eine hydraulische Zylinderkolbeneinheit ausfahrbaren Stützradeinheit und einem Fördermittel zum Fördern von Druckmedium in die Zylinderkolbeneinheit. Die Stützvorrichtung weist wenigstens ein Ventil auf, welches ein Aus- und Einfahren der Stützradeinheit durch eine von einem Bediener direkt auf die Stützradeinheit aufgebrachte mechanische Kraft ohne Betätigung des Fördermittels ermöglicht.

## Beschreibung

Die vorliegende Erfindung betrifft eine Stützvorrichtung für Anhänger mit einer durch eine hydraulische Zylinderkolbeneinheit ausfahrbaren Stützradeinheit und einem mit der Zylinderkolbeneinheit strömungstechnisch verbundenen Fördermittel zum Fördern von Druckmedium.

Derartige Stützvorrichtungen sind aus dem Stand der Technik beispielsweise für Kfz-Anhänger, LKW-Anhänger oder landwirtschaftliche Maschinen bekannt. Die Stützvorrichtungen dienen bei einachsigen und zweiachsigen Anhängern mit geringem Achsenabstand einem sicheren Abstützen der Anhänger der Deichsel bei abgehängtem Anhänger. Darüber hinaus haben die Stützvorrichtungen den Zweck, daß An- und Abhängen des Anhängers durch Anheben und Absenken des am Ende der am Anhängerachse befindlichen Kupplungselementes auf die Anhängerkupplung zu erleichtern.

Das Stützrad muß einen Verstellbereich aufweisen, der ein Ausfahren des Stützrades in einem solchen Maß ermöglicht, daß die Deichsel so weit angehoben werden kann, daß ein An- und Abhängen des Anhängers auch bei unebenem Untergrund und verschiedenen Kupplungshöhen möglich ist. Darüber hinaus muß das Stützrad soweit eingefahren werden können, daß bei angehängtem Anhänger zwischen Stützrad und Untergrund ein ausreichender Abstand vorhanden ist, so daß ein Aufsetzen des Stützrades während der Fahrt bei Bodenunebenheiten sicher vermieden werden kann. Der für eine wunschgemäße Funktionsweise erforderlicher Verstellbereich des Stützrades ist daher zwangsläufig verhältnismäßig groß.

Aus dem Stand der Technik sind verschiedene technische Lösungen bekannt, mittels denen das Stützrad mit verhältnismäßig geringem Aufwand über den erforderlichen Verstellbereich bewegbar ist. So ist es beispielsweise bekannt, ein hydraulisch oder mittels eines Spindel-Mutter-Systems betätigbares Stützrad in einem hülsenartigen Führungskörper anzuordnen, welcher mittels eines Klemmechanismusses an der Deichsel des Anhängers befestigt ist. Durch Lösen des Klemmechanismusses ist die gesamte Stützvorrichtung auf den Untergrund absenkbar. Durch Festklemmen der Stützvorrichtung mittels des Klemmechanismusses und ein nachfolgendes Herausfahren des Stützrades mittels des Spindel-Mutter-System bzw. der Hydraulik ist die Deichsel des Anhängers anhebbar und absenkbar. Die Bedienung einer derartigen Stützvorrichtung ist nachteilig verhältnismäßig aufwendig. Der Klemmechanismus neigt vor allem nach längerem Einsatz zu Korrosion und Verschmutzung und ist daher nicht unproblematisch zu bedienen. Darüber hinaus bietet eine derartige Stützvorrichtung nachteilig zahlreiche Möglichkeiten, die Finger bzw. Hände des Anwenders zu klemmen, stoßen und zu verschmutzen.

Es sind des weiteren Stützvorrichtungen bekannt, welche ebenfalls hydraulisch oder mittels eines Spindel-Mutter-Systems ein- und ausfahrbar sind, bei denen eine das Stützrad aufnehmende Hülse relativ zur Deichsel ortsfest an dieser angebracht ist. Das Stützrad weist einen gelenkig an der Kolbenstange bzw. Spindel angelenkten Radschuh mit einer Kulissenbahnführung auf. Beim Ein- bzw. Ausfahren des Stützrades bewirkt diese Kulissenführung, daß das Stützrad um die Anlenkung herum aus- bzw. einklappt. Durch diese Klappbewegung des Stützrades wird zwar im Vergleich zu anderen herkömmlichen Stützvorrichtungen das Ein- bzw. Ausfahren des Stützrades vereinfacht und beschleunigt, allerdings ist der Verstellbereich, über den das Stützrad mittels des Spindel-Mutter-Systems bzw. der Hydraulik bewegt werden muß, immer noch verhältnismäßig groß. Darüber hinaus erfordert der Klappmechanismus des Stützrades einen Feststellmechanismus, welcher bewirkt, daß das Stützrad im heruntergeklappten Zustand nicht wieder einklappen kann. Dieser Mechanismus neigt nachteilig vor allem nach längerem Einsatz häufig zum Verklemmen bzw. Versagen. Eine ordnungsgemäße und unaufwendige Funktion der Stützeinheit ist daher ebenfalls nicht gewährleistet.

Ausgehend von diesem Stand der Technik ist es die Aufgabe der vorliegenden Erfindung, eine aus dem Stand der Technik bekannte Stützvorrichtung derart zu verbessern, daß sie ein unaufwendiges und schnelles Ein- und Ausfahren des Stützrades zum An- bzw. Abkuppeln eines Anhängers ermöglicht. Darüber hinaus soll die Stützvorrichtung auch nach einem längeren Einsatz zuverlässig funktionieren und nur möglichst geringe Verletzungsmöglichkeiten für einen Nutzer aufweisen.

Diese Aufgabe wird durch eine gattungsgemäße Stützvorrichtung gelöst, bei welcher die Stützvorrichtung wenigstens ein Ventil aufweist, welches ein Aus- und Einfahren der Stützradeinheit durch eine von einem Bediener direkt auf die Stützradeinheit aufgebrachte mechanische Kraft ohne Betätigung des Fördermittels ermöglicht.

Will ein Nutzer einen mit der erfindungsgemäßen Stützvorrichtung versehenen Anhänger beispielsweise an ein Kraftfahrzeug anhängen, so verfährt er die mit der Zylinderkolbeneinheit verbundene Stützradeinheit durch Aufbauen eines erhöhten Druckes innerhalb des Zylinders mittels des Fördermittels gegen die Stützlast weiter aus, wodurch sich die Deichsel und das an dieser befindliche Kupplungsmaul anhebt. Befindet sich das Kupplungsmaul in einer geeigneten Höhe, so ordnet der Nutzer die am Kraftfahrzeug befindliche Kupplung und das an der Anhängerdeichsel befindliche Kupplungsmaul durch Rangieren des Kraftfahrzeuges bzw. des Hängers übereinander an. Durch ein Ablassen des Druckmediums aus dem Zylinder senkt sich das Kupplungsmaul auf die Kupplung ab. Die bisher vom Stützrad getragene Stützlast wird nun vollständig von der Anhängerkupplung auf das Kraftfahrzeug übertragen, daß heißt, die Stützvorrichtung ist stützlastfrei. Zum vollständigen Einfahren der Stützradeinheit wird dieses im nunmehr vorliegenden lastfreien Zustand in einer Art Eilgang, beispielsweise durch simples Anheben des Stützrades, in die eingezogene Transportstellung gebracht. Das Anheben kann vorteilhaft selbsttätig erfolgen. Der Nutzer braucht einerseits keine Hubarbeit zu verrichten, wobei die Vorrichtung andererseits ein schnelles Anheben ermöglichen kann.

Zum Abkuppeln des Anhängers wird das Stützrad aus der eingezogenen Transportstellung im Eilgang auf den Untergrund abgesenkt. Dieses erfolgt beispielsweise durch manuelles Herunterdrücken oder Belasten der Stützradeinheit mit dem Fuß des Bedieners, bis diese auf den Untergrund abgesenkt ist. Wie zuvor beim Ankuppeln beschrieben, wird die Stützradeinheit nun durch Aufbringen eines Druckes innerhalb der Zylinderkolbeneinheit weiter ausgefahren, so daß sich das Kupplungsmaul von der Kupplung des Kraftfahrzeuges abhebt.

Vorteilig weist die Stützvorrichtung ein Rückschlagventil auf, welches einen Druckmediumsfluß in den Zylinder hinein ermöglicht und einen Druckmediumsfluß aus dem Zylinder heraus verhindert. Auf diese Weise wird erreicht, daß beim Ausfahren der Stützradeinheit im Eilgang Druckmedium in den sich vergrößernden Innenraum des Zylinders einströmen kann, daß allerdings durch das Ventil ein Herausströmen des Druckmediums aus dem Zylinder und somit ein ungewolltes Einfahren der Stützradeinheit in den Zylinder verhindert wird.

Die erfindungsgemäße Stützvorrichtung weist gemäß einer weiteren Ausführungsform vorteilhaft ein Absperrventil auf, mit dem der Strom des Druckmediums aus dem Zylinder heraus absperrbar ist. Dieses Ventil ist mit Vorteil manuell, beispielsweise über ein Handrad, betätigbar. Durch ein Öffnen dieses Ventils kann in dem Zylinder befindliches Druckmedium ausströmen, z. B. über eine Rückflußleitung in ein Reservoir.

Gemäß einer besonders vorteilhaften Ausführungsform der Erfindung ist die Zylinderkolbeneinheit in den eingefahrenen Zustand vorgespannt. Dieses kann mittels beliebiger Spannmittel erfolgen, als vorteilhaft hat sich allerdings eine Vorspannung durch eine Druckfeder, beispielsweise in Form einer Spiralfeder, herausgestellt. Die Vorspannung ist mit Vorteil so ausgewählt, daß die Vorspannungskraft ausreicht, die Stützradeinheit nebst mit diesen fest verbundenen Elementen über eventuell auftretende Reibungs- und Strömungskräfte der Zylinderkolbeneinheit hinweg aus der ausgefahrenen Stellung in die Transportstellung einzufahren. Die Vorspannkraft weist vorteilig allerdings eine solche Größe auf, daß es dem Bediener ohne große Kraftanstrengung möglich ist, die Stützradeinheit manuell oder durch Herunterdrücken mit dem Fuß aus der eingefahrenen Transportstellung heraus gegen die Vorspannkraft auf den Untergrund abzusenken.

In vorteilhafter Weise ist der Zylinder der Zylinderkolbeneinheit ortsfest zur Zugdeichsel des Anhängers angeordnet Der Zylinder kann direkt mit der Zugdeichsel verbunden sein oder mittels eines geeigneten Adapters auswechselbar an der Deichsel befestigt sein. Im Falle eines an dem Zylinder angeordneten Befestigungsadapters besteht vorteilhaft die Möglichkeit, daß die erfindungsgemäße Stützvorrichtung an bereits im Gebrauch befindlichen Anhängern nachrüstbar ist.

Die Vorspannung der Zylinderkolbeneinheit ist vorteilhaft so groß, daß durch ein Öffnen dieses Ventils in dem Zylinder befindliches Druckmedium über die Rückflußleitung herausströmt, bis der Kolben vollständig eingefahren ist, und sich die Stützradeinheit in der Transportstellung befindet.

Eine weitere Ausführungsform der Erfindung sieht vor, daß an dem der Stützradeinheit gegenüberliegenden Ende der Zylinderkolbeneinheit das Fördermittel zum Fördern von Druckmedium in den Zylinder angeordnet ist. Vorteilhaft handelt es sich dabei um eine Hydraulikpumpe. Eine derartige Hydraulikpumpe ist robust, einfach zu bedienen, unabhängig von externen Energiequellen und zu verhältnismäßig geringen Kosten erhältlich. Die Hydraulikpumpe dient einer bequemen und problemlosen Förderung von Druckmedium in den Zylinder und damit einem Ausfahren der Stützradeinheit. Es besteht die Möglichkeit, die Hydraulikpumpe derart zu konzipieren, daß das Absperrventil und das Rückschlagventil direkt an der Pumpe angeordnet sind und somit keine externen Druckmediumsleitungen verwendet werden müssen.

Die Stützradeinheit weist ein Stützrad auf, das mit einem Radschuh an dem dem Zylinder gegenüberliegenden Ende des Kolbens angeordnet ist. Das Stützrad ist in dem Radschuh drehbar aufgenommen. Die Stützradeinheit ist um die Längsachse der Zylinderkolbeneinheit drehbar. Dadurch wird ermöglicht, daß der Anhänger auch im abgekoppelten Zustand einfach zu versetzen und manövrierbar ist.

Gemäß einer vorteilhaften Ausführungsform der Erfindung ist vorgesehen, daß das Absperrventil abschließbar ist. Auf diese Weise wird erreicht, daß das Absperrventil nicht von Unberechtigten geöffnet und der Anhänger somit an ein Kraftfahrzeug angehängt werden kann. Ein derartig gesichertes Absperrventil bildet somit eine wirksame Diebstahlsicherung.

Mit Vorteil weist die Stützvorrichtung Druckmeß- und Druckanzeigemittel für den in dem Zylinder vorliegenden Mediumsdruck auf. Bei Kenntnis der der innerhalb der Zylinderkolbeneinheit Druckkräfte übertragenden Flächen kann mittels derartiger Druckanzeigemittel vorteilhaft die auf der Deichsel des Anhängers lastende Stützlast gemessen werden. Ein Überschreiten der maximal zulässigen Stützlast durch falsches bzw. übermäßiges Beladen des Anhängers kann somit verhindert werden.

Weitere Vorteile und Merkmale der vorliegenden Erfindung ergeben sich aus der folgenden Beschreibung einer besonders bevorzugten, jedoch nicht beschränkenden Ausführungsform anhand der folgenden Figur, welche eine Stützvorrichtung, teilweise geschnitten in einer Seitenansicht zeigt.

Die Stützvorrichtung 1 weist einen Hydraulikzylinder 10 auf, der mit einer Befestigungsplatte 12 versehen ist. Der Hydraulikzylinder 10 hat eine rohrförmige Kontur, besteht aus nicht rostendem Stahl und ist mit der Befestigungsplatte 12 fest verschweißt. Die Befestigungsplatte 12 ist mit Durchgangsöffnungen 24 versehen. Mittels dieser Durchgangsöffnungen 24 wird die Befestigungsplatte 12 an geeigneter Stelle mit der Deichsel eines Anhängers verschraubt. Die Verschraubung erfolgt gegebenenfalls unter Verwendung nicht dargestellter Adapterelemente, so daß die Stützvorrichtung 1 an beliebigen Anhängermodellen anbringbar und austauschbar ist.

Der Hydraulikzylinder 10 ist an seinen beiden offenen Enden mit Innengewinden 25, 26 versehen. In das am in der Figur unteren Ende eingebrachte Innengewinde 26 des Hydraulikzylinders 10 ist ein Endstopfen 23 unter Verwendung eines O-Dichtrings 18 druckmediumsdicht eingeschraubt. Der Endstopfen 23 weist eine zentrische Durchgangsöffnung mit einem O-Dichtring 18 auf, welche als Führung für eine in dem Hydraulikzylinder 10 aufgenommene Kolbenstange 13 dient. Die Kolbenstange 13 ist an ihrem vom Hydraulikzylinder 10 abgewandten Ende mit einem Radschuh 19 verschweißt, welcher wiederum ein Stützrad 20 drehbar in bekannter Form aufnimmt. An ihrem hydraulikzylinderseitigen Ende trägt die Kolbenstange 13 einen Kolbenring 16. Zu diesem Zweck weist die Kolbenstange 13 an ihrem zylinderseitigen Ende einen Anschlag 27 und einen Bereich mit vermindertem Querschnitt auf. Der Kolbenring 16 ist auf diesen Bereich mit vermindertem Querschnitt gegen den Anschlag 27 aufgeschoben und mittels eines Seegerringes 17 gesichert.

Zwischen dem Kolbenring 16 und dem Endstopfen 23 ist eine Druckfeder 14 angeordnet. Die Druckfeder 14 spannt die aus Kolbenring 16, Kolbenstange 13, Radschuh 19 und Stützrad 20 gebildete Einheit in dem in den Hydraulikzylinder 10 eingefahrenen Zustand vor. In dieser Stellung kann diese Einheit durch zusätzliche nicht dargestellte Sicherungsmittel gesichert werden. Die durch die Druckfeder 14 und den Druck des Hydraulikmediums innerhalb des Hydraulikzylinders 10 ausgeübten Kräfte wirken gegeneinander. Die Federsteifigkeit und Kennlinie der Druckfeder 14 ist so ausgewählt, daß die Vorspannkraft der Druckfeder 14 sowohl durch den im Hydraulikzylinder 10 wirkenden Druck, als auch durch eine von einer Bedienperson von außen auf das Stützrad 20 oder den Radschuh 19 in Richtung des Untergrundes 29 wirkende Kraft überwunden werden kann.

Der Kolbenring 16 ist derart ausgestaltet, daß ein Überströmen des Hydraulikmediums im Falle der Bewegung des Kolbenringes 16 in axialer Richtung der Kolbenstange 13 von einer seinen Seiten zur gegenüberliegenden Seite ermöglicht ist.

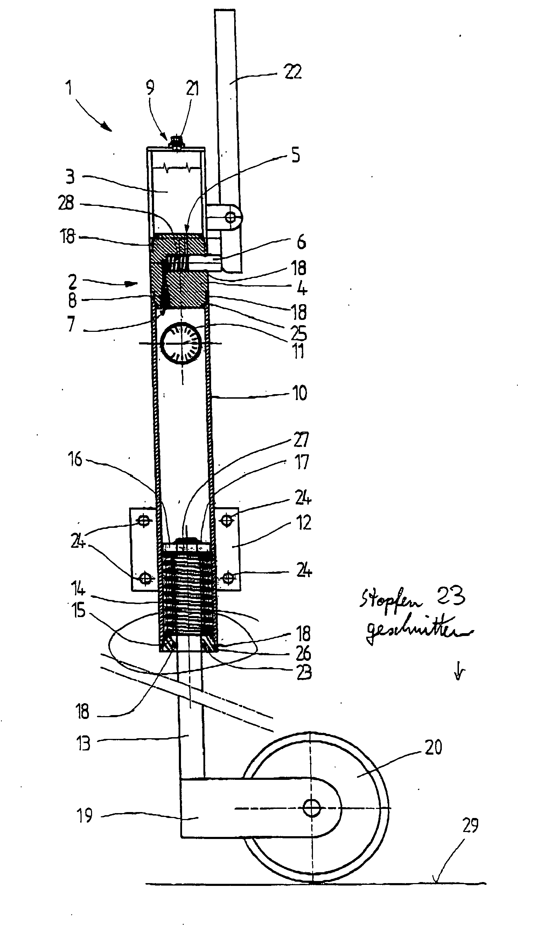

In das in der Figur obere Innengewinde 25 des Hydraulikzylinders 10 ist ein Pumpenkörper 4 einer hydraulischen Handpumpe 2 unter Verwendung einer O-Ringdichtung 18 mediumsdicht eingeschraubt. Die hydraulische Handpumpe 2 ist eine gebräuchliche Handpumpe bekannter Art und zum Zwecke der Erläuterung in der Figur lediglich schematisch dargestellt. Die hydraulische Handpumpe 2 besteht im wesentlichen aus dem Pumpenkörper 4 und einem Pumpenkolben 6, der mittels eines Pumpenhebels 22 betätigt wird. Der Pumpenhebel 22 ist an der Stützvorrichtung 1 relativ zu dieser ortsfest angelenkt. In dem Pumpenkörper 4 sind Durchflußkanäle für das Hydraulikmedium vorgesehen. An dem dem Hydraulikzylinder 10 gegenüberliegenden Ende des Pumpenkörpers 4 ist dieser mit einem weiteren Gewinde versehen, auf welches ein Hydrauliktank 3 ebenfalls unter Verwendung einer O-Ringdichtung 18 mediumsdicht aufgeschraubt ist. Der Hydrauliktank 3 besteht im dargestellten Ausführungsbeispiel aus dem gleichen Material wie der Hydraulikzylinder 10 und besitzt den gleichen. Durchmesser. An seinem dem Pumpenkörper 4 gegenüberliegenden Ende ist der Hydrauliktank 3 mit einem Tankstutzen 9 versehen, welcher mit einem Schraub-Stopfen 21 mediumsdicht verschließbar ist. Das in dem Hydrauliktank 3 befindliche Druckmedium wird durch Betätigung des Pumpenhebels 22 und des Pumpenkolbens 6 durch eine aus einer Einlaßöffnung 5, Pumpenkolbenraum 28 und Auslaßöffnung 7 gebildete Zuströmleitung in den Hydraulikzylinder 10 gefördert. Im Bereich der Auslaßöffnung 7 ist in diesem Durchfluß ein Rückschlagventil 8 angeordnet. Dieses Rückschlagventil 8 ermöglicht einen Mediumsstrom vom Hydrauliktank 3 in Richtung des Hydraulikzylinders 10 und sperrt einen Durchfluß in entgegengesetzter Richtung. Neben dem zuvor beschriebenen Durchfluß zum Einströmen des Hydraulikmediums vom Hydrauliktank 3 in den Hydraulikzylinder 10 ist der Pumpenkörper 4 mit einer weiteren, in Fig. 1 nicht dargestellten Rückströmleitung versehen. Diese Rückströmleitung ist mittels eines ebenfalls nicht dargestellten Handventils absperrbar und dient einem Rückströmen von Hydraulikmedium vom Hydraulikzylinder 10 in den Hydrauliktank 3.

Anstelle der Gewinde 25, 26 kann auch vorgesehen sein, daß eine Verbindung mittels einem Sicherungsdraht oder dergleichen vorgesehen ist.

Zum Einfahren der Stützradeinheit in den Hydraulikzylinder 10 aus der in der Figur dargestellten Lage wird das oben beschriebene Handventil des Rückströmdurchflusses geöffnet. Durch den von der Druckfeder 14 über den Kolbenring 16 auf das Druckmedium ausgeübten Druck strömt das Druckmedium durch den Rückströmdurchfluß bei geöffnetem Ventil in den Hydrauliktank 3 zurück. Die Druckfeder 14 ist so dimensioniert, daß die durch sie ausgeübte Druckkraft ausreicht, um sowohl dieses Rückströmen des Druckmediums als auch das Anheben der aus Kolbenring 16, Kolbenstange 13, Radschuh 19 und Stützrad 20 gebildeten Einheit zu ermöglichen. Als Resultat wird durch ein Öffnen des Rückströmventils durch die Federkraft der Druckfeder 14 die Stützradeinheit automatisch eingefahren.

Zum Ausfahren der Stutzradeinheit tritt eine Bedienperson belspielsweise mit dem Fuß auf das Stützrad 20 oder dem Radschuh 19 und drückt die aus Kolbenring 16, Kolbenstange 13, Radschuh 19 und Stützrad 20 bestehende Stützradeinheit gegen die Federkraft der Druckfeder 14 aus dem Hydraulikzylinder 10 heraus auf den Untergrund 29. Bei diesem Vorgang ist das nicht dargestellte Handströmventil geschlossen. Durch den innerhalb des Hydraulikzylinders 10 entstehenden Unterdruck strömt Hydraulikmedium vom Hydrauliktank 3 durch die Einströmöffnung 5, den Pumpenkolbenraum 28 und die Auslaßöffnung 7 in den Hydraulikzylinder 10 nach. Ein Rückströmen des Hydraulikmediums wird durch das in der Auslaßöffnung 7 plazierte Rückschlagventil 8 und die mittels des Handventils verschlossene Rückströmleilung verhindert. Die Stützradeinheit verbleibt daher in der zunächst erreichten Stellung. Um nun die Deichsel des Anhängers gegen die wirkende Stützlast anzuheben, wird mittels der hydraulischen Handpumpe 2 Hydraulikmedium vom Hydrauliktank 3 in den Hydraulikzylinder 10 gepumpt. Aufgrund des ansteigendes Druckes innerhalb des Hydraulikzylinders 10 fährt die Kolbenstange 13 weiter aus dem Hydraulikzylinder 10 aus. Durch geeignet gewählte Flächenverhältnisse des Pumpenkolbens 6 und des Kolbenringes 16 sowie Hebelverhältnisse des Pumpenhebels 22 erfolgt das weitere Ausfahren der Stützradeinhelt gegen die wirkenden Auflagekräfte einfach und leicht.

Das in der Figur nicht dargestellte Handrad des Rückströmventils ist mit einem Schloß abschließbar. Für Unbefugto ist es bei abgeschlossenem Handrad unmöglich, die Rückströmleitung vom Hydraulikzylinder 10 zum Hydrauliktank 3 zu öffnon und die Stützradeinheit einzufahren. Ein unberechtigtes Anhängen des mit der erfindungsgemäßen Stützvorrichtung 1 versehenen Anhängers wird daher wirkungsvoll verhindert.

An dem Hydraulikzylinder 10 ist eine Druckanzeige 11 angeordnet. Die Druckanzeige 11 zeigt den jeweils im Inneren des Hydraulikzylinders 10 vorliegenden Hydraulikdruck an. Die Skala der Druckanzeige 11 ist dabei so ausgestaltet, daß nicht nur der vorherrschende Druck, sondem ebenfalls die auf die Stützvorrichtung 1 wirkende Stützlast angezeigt wird. Auf diese Weise dient die Druckanzeige 11 gleichzeitig als Stützlastanzeige und Kontrollinstrument, um ein falsches oder übermäßiges Beladen des Anhängers verhindern zu können.

Die erfindungsgemäße Ausgestaltung weist den Vorteil auf, daß keine inneren Leckagen auftreten können, da der Hydraulikzylinder 10 immer vollständig mit Hydraulikmedium gefüllt ist. Ferner hat es sich gezeigt, daß Kosten eingespart werden können, da eine Feinbearbeitung der Innenwand des Zylinders nicht erforderlich ist. Darüber hinaus kann mit der erfindungsgemäßen Ausgestaltung bei gleichem Hub eine Reduzierung einer Hydraulikmediumdifferenz gegenüber einer Ausgestaltung mit einem abdichtenden Kolbenring erreicht werden, welches unter anderem Vorteile in der Bedienung mit sich bringt.

### B e z u g s z e i c h e n

- 1: Stützvorrichtung
- 2: Handpumpe
- 3: Hydrauliktank
- 4: Pumpenkörper
- 5: Einlaßöffnung
- 6: Pumpenkolben
- 7: Auslaßöffnung
- 8: Rückschlagventil
- 9: Tankstutzen
- 10: Hydraulikzylinder
- 11: Druckanzeige
- 12: Befestigungsplatte
- 13: Kolbenstange
- 14: Druckfeder
- 15: endseitiger Anschlag
- 16: Kolbenring
- 17: Seegerring
- 18: O-Ringdichtung
- 19: Radschuh
- 20: Stützrad
- 21: Schraub-Stopfen
- 22: Pumpenhebel
- 23: Endstopfen
- 24: Bohrung
- 25: Innengewinde
- 26: Innengewinde
- 27: Anschlag
- 28: Pumpenkolbenraum
- 29: Untergrund

## Patentansprüche

1. Stützvorrichtung für die Deichsel eines Anhängers mit einer durch eine Zylinderkolbeneinheit ausfahrbaren Stützradeinheit und einem mit der Zylinderkolbeneinheit strömungstechnisch verbundenen Fördermittel zum Fördern von Druckmedium,
**dadurch gekennzeichnet, daß**
die Stützvorrichtung wenigstens ein Ventil aufweist, welches ein Aus- und Einfahren der Stützradeinheit durch eine von einem Bediener direkt auf die Stützradeinheit aufgebrachte mechanische Kraft ohne Betätigung des Fördermittels ermöglicht.

2. Stützvorrichtung gemäß Anspruch 1, **dadurch gekennzeichnet, daß** diese ein Rückschlagventil aufweist, welches einen Druckmediumsfluß in den Zylinder der Zylinderkolbeneinheit hinein ermöglicht und einen Druckmediumsfluß aus dem Zylinder heraus verhindert.

3. Stützvorrichtung nach Anspruch 1 oder 2, **dadurch gekennzeichnet, daß** der Strom des Druckmediums aus dem Zylinder heraus mit einem Absperrventil absperrbar ist.

4. Stützvorrichtung nach zumindest einem der vorhergehenden Ansprüche, **dadurch gekennzeichnet, daß** die Zylinderkolbeneinheit im eingefahrenen Zustand vorgespannt ist.

5. Stützvorrichtung nach Anspruch 4, **dadurch gekennzeichnet, daß** die Zylinderkolbeneinheit mittels einer Druckfeder vorgespannt ist.

6. Stützvorrichtung nach zumindest einem der vorhergehenden Ansprüche, **dadurch gekennzeichnet, daß** das Fördermittel an dem der Stützradeinheit gegenüberliegenden Ende der Zylinderkolbeneinheit angeordnet ist.

7. Stützvorrichtung nach zumindest einem der vorhergehenden Ansprüche, **dadurch gekennzeichnet, daß** die Stützradeinheit ein Stützrad aufweist, das mit einem Radschuh an dem dem Zylinder gegenüberliegenden Ende des Kolbens angeordnet ist.

8. Stützvorrichtung nach zumindest einem der Ansprüche 3 bis 7, **dadurch gekennzeichnet, daß** das Absperrventil abschließbar ist.

9. Stützvorrichtung nach zumindest einem der vorhergehenden Ansprüche, **dadurch gekennzeichnet, daß** diese Druckmeß- und Druckanzeigemittel für den innerhalb der Zylinderkolbeneinheit vorliegenden Druck aufweist.

10. Stützvorrichtung nach Anspruch 10, **dadurch gekennzeichnet, daß** das Druckanzeigemittel als Stützlastanzeige ausgebildet ist.
